# EUROPEAN PATENT APPLICATION

(11) **EP 2 887 560 A1**
(43) Date of publication of application: **24.06.2015**
(21) Application number: 13306763.7
(22) Date of filing: 18.12.2013
(51) Int. Cl.: H04B 7/06, H04B 7/08

(54) **Beamforming Apparatus, Method and Computer Program for a Transceiver**

(71) Applicant: ALCATEL LUCENT, 92100 Boulogne-Billancourt (FR)
(72) Inventor: Braun, Volker, 70435 Stuttgart (DE); Hoek, Cornelis, 70435 Stuttgart (DE); Boccardi, Federico, 20059 Vimercate, MI (IT); Halbauer, Hardy, 7435 Stuttgart (DE); Baracca, Paolo, 70435 Stuttgart (DE)
(74) Representative: 2SPL Patentanwälte PartG mbB

(57) **Abstract**

Embodiments provide an apparatus, a method and a computer program for the transceiver of a mobile communication system. The apparatus (10) is operable in a first transceiver (100) of a mobile communication system. The apparatus (10) comprises a transceiver module (12) comprising interfaces to a plurality of transmit antennas (15). The transceiver module (12) is operable to subdivide the plurality of transmit antennas (15) in a plurality of subgroups using the interfaces, and to form a set of first beam patterns (16) using one or more transmit antennas of a subgroup. The apparatus (10) further comprises a control module (14) operable to determine information related to a quality of a radio link between the first transceiver (100) and the second transceiver (200). The control module (14) is further operable to determine a second beam pattern (18) for communicating with the second transceiver (200) using two or more beam patterns from the set of first beam patterns (16). A number of first beam patterns used to determine the second beam pattern (18) is based on the information related to the quality of the radio link between the first transceiver (100) and the second transceiver (200). The control module (14) is further operable to communicate with the second transceiver (200) using the second beam pattern (18) and the transceiver module (12).

## Description

### Technical Field

Embodiments relate to a beamforming apparatus, a method and a computer program for a transceiver of a mobile communication system, more particularly but not exclusively, to efficient beamforming in mobile communication systems.

### Background

This section introduces aspects that may be helpful in facilitating a better understanding of the invention(s). Accordingly, the statements of this section are to be read in this light and are not to be understood as admissions about what is in the prior art or what is not in the prior art.

With the increasing demand for data services, wireless systems tend to use more and more bandwidth and higher carrier frequencies. For example, Fifth Generation (5G) wireless access may be expected to embrace mm-Wave frequencies to provide multi-Gbps data rates, typically in femto, pico, or metro cell type of deployments. Free space propagation or path loss increases at higher frequencies and may be compensated by exploiting antenna directivity. This may be achieved using high gain adaptive BeamForming (BF) solutions. Adaptive beam-steering may be implemented by analog phase shifters, fully digitally, e.g. by equipping each antenna with a fully digital transmit/receive path, or as hybrid digital/analog solutions, e.g. by connecting each digital transmit/receive path to a set of antennas via analog phase shifters. Base station antenna arrays may include, e.g. 8, 16, 32, 64 or more antenna elements, e.g. tiny horn antenna elements.

### Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide an apparatus, a method and a computer program for a transceiver of a mobile communication system, which may correspond to a base station transceiver or a mobile transceiver. Embodiments may provide an efficient concept for BF in a mobile communication system by considering radio link quality information for BF. In other words, a BF gain may be adapted to a radio link quality of a user or transceiver, e.g. by adapting a number of antenna elements used to serve the user.

Embodiments provide an apparatus, which is operable in a first transceiver of a mobile communication system. The first transceiver may correspond to a base station transceiver or a mobile transceiver. The transceiver apparatus comprises a transceiver module, which comprising interfaces to a plurality of transmit antennas. The transceiver module is operable to subdivide the plurality of transmit antennas in a plurality of subgroups using the interfaces. The transceiver module is operable to form a set of first beam patterns using one or more transmit antennas of a subgroup. The apparatus further comprises a control module, which is operable to determine information related to a quality of a radio link between the first transceiver and a second transceiver. The control module is further operable to determine a second beam pattern for communicating with the second transceiver using two or more beam patterns from the set of first beam patterns. A number of first beam patterns used to determine the second beam pattern is based on the information related to the quality of the radio link between the first transceiver and the second transceiver. The control module is operable to communicate with the second transceiver using the second beam pattern and the transceiver module. Embodiments may enable adaptation of a BF gain to the information related to the quality of the radio link.

In some embodiments the control module may be operable to determine information related to a quality of a radio link between the first transceiver and at least a third transceiver. The control module is further operable to determine at least a third beam pattern for communicating with the at least one third transceiver using one or more beam patterns from the first set of beam pattern. A number of first beam patterns used to determine the third beam pattern is based on the second beam pattern and on the information related to the quality of the radio link between the first transceiver and the third transceiver. The control module is further operable to simultaneously communicate with the third transceiver using the third beam pattern and with the second transceiver using the second beam pattern. Embodiments may enable spatial multiplexing of a second and a third transceiver based on their radio link qualities.

The control module may be operable to use the same or a different number of first beam patterns to determine the second and the third beam pattern. Embodiment may enable spatial multiplexing of multiple transceivers using multiple pre-formed beam patterns. In some embodiments the third beam pattern may be adapted to the second beam pattern such that main lobes of the second and the third beam patterns point in different directions, or the second and third beam patterns are substantially orthogonal. Embodiments may enable spatial division multiple access based on the set of first beam patterns.

The control module may be operable to determine a second beam pattern with a first higher BF gain when the quality of the radio link between the first transceiver and the second transceiver indicates a first lower quality. The control module may be operable to determine a second beam pattern with a second lower BF gain when the quality of the radio link between the first transceiver and the second transceiver indicates a second higher quality. Embodiments may enable adaptation of the BF gain, and therewith adaptation of a number of antennas used to serve a transceiver with a given radio link quality.

In some embodiments the first transceiver may be operable to form the first set of beam patterns using analog BF. The control module may be operable to determine the second beam pattern using digital BF. Embodiments may provide an efficient hybrid analog/digital BF concept. The control module may be operable to determine information related to a quality of two or more spatially differing paths of the radio link between the first transceiver and the second transceiver. The second beam pattern may be based on the quality of a path from the two or more paths of the radio link and the second beam pattern may be used to communicate with the second transceiver using the path of the two or more paths of the radio link. The control module may be further operable to determine a further beam pattern for communicating with the second transceiver using another of the two or more paths. A number of first beam patterns used to determine the further beam pattern is based on the second beam pattern and on the information related to the quality of the other path of the two or more paths of the radio link between the first transceiver and the second transceiver. The control module may then be operable to communicate with the second transceiver using the second beam pattern and the further beam pattern along the two or more paths of the radio link.

Embodiments may enable a communication of spatially multiplexed data streams to the same transceiver using BF. The control module may be operable to simultaneously communicate different data using the second beam pattern and the further beam pattern to the second transceiver. In some embodiments the control module may be operable to simultaneously communicate space-time encoded data using the second beam pattern and the further beam pattern to the second transceiver. In some embodiments the same data may be communicated along multiple paths. Embodiments may enable diversity gain on a radio link of a transceiver using spatial exploitation of multi path propagation.

The further beam pattern may be adapted to the second beam pattern such that main lobes of the further and the second beam pattern point in different directions, or the second beam pattern and third beam pattern are substantially orthogonal. Multi path diversity or multiplexing may be exploited using spatial orthogonalization of the respective paths of a radio link.

In some embodiments the control module may be operable to determine the second beam pattern with a first higher BF gain when the quality of the radio link between the first transceiver and the second transceiver indicates a slower moving first or second transceiver. The control module may be operable to determine a second beam pattern with a second lower BF gain when the quality of the radio link between the first transceiver and the second transceiver indicates a faster moving first or second transceiver. Embodiments may enable adaptation of BF gain to a velocity or Doppler shift of a transceiver, for example, wider beams with lower BF gains may be used for fast moving transceivers, which may enhance the robustness of a communication link to the respective transceiver.

In some embodiments a transmit antenna may use an individual beam pattern covering a sector of the first transceiver and the set of first beam patterns may correspond to a set of subsectors of the sector. Embodiments may enable adaptive BF in sub-sectors of a sector. The control module may be operable to determine the second beam pattern by selection of one beam pattern from the set of first beam pattern. Embodiments may enable efficient fixed beam switching. The control module may be operable to determine the second beam pattern by using different combinations of one or more beam patterns of the set of first beam patterns in a time multiplexed manner. Embodiments may enable efficient beam selection using a time division multiplexing scheme for the beam patterns of the set of first beam patterns.

Embodiments further provide a method for a first transceiver of a mobile communication system. The method comprises subdividing a plurality of transmit antennas in a plurality of subgroups, and forming a set of first beam patterns using one or more transmit antennas of a subgroup. The method further comprises determining information related to a quality of a radio link between the first transceiver and a second transceiver. The method further comprises determining a second beam pattern for communicating with the mobile transceiver using one or more of the first beam pattern. A number of first beam patterns used to determine the second beam pattern is based on the information related to the quality of the radio link between the first transceiver and the second transceiver. The method further comprises communicating with the second transceiver using the second beam pattern.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 illustrates a block diagram of an embodiment of an apparatus for a transceiver;
Fig. 2 shows an embodiment using hybrid analog and digital BF;
Fig. 3 shows an embodiment using hybrid analog and digital BF and spatial multiplexing of two transceivers;
Fig. 4 illustrates beam patterns in an embodiment using hybrid analog and digital BF and spatial multiplexing of two transceivers;
Fig. 5 illustrates further beam patterns in an embodiment using hybrid analog and digital BF and spatial multiplexing of two transceivers; and
Fig. 6 illustrates a block diagram of a flow chart of an embodiment of a method for a transceiver.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

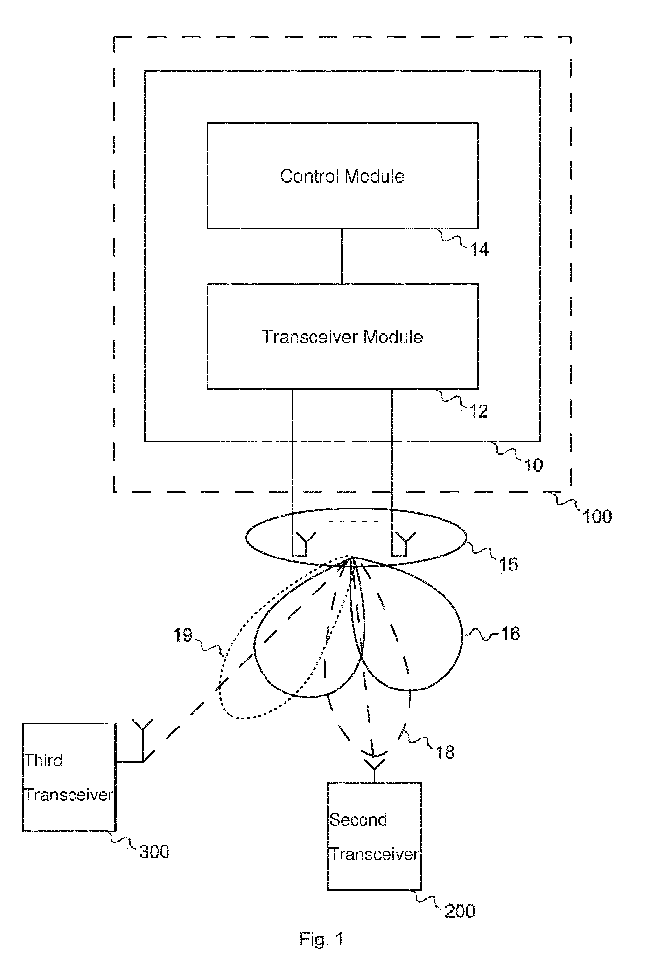

In the following some embodiments of apparatuses, methods, and computer programs for a transceiver of a mobile communication system will be described. Fig. 1 illustrates a block diagram of an embodiment of an apparatus 10, which is operable in a first transceiver 100 of a mobile communication system. In other words, the apparatus 10 may be adapted to or operable in a transceiver 100; may be operated by or comprised in the transceiver 100. Embodiments may also provide a transceiver 100 comprising the apparatus 10. Such a transceiver 100 may correspond to a base station transceiver or a mobile transceiver of a mobile communication system.

The mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

A mobile transceiver can be associated with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

Fig. 1 further shows an embodiment (dashed lines) of a transceiver 100 comprising the apparatus 10. The apparatus 10 comprises a transceiver module 12. The transceiver module 12 comprises interfaces to a plurality of transmit antennas 15. The transceiver module 12 may be implemented as one or more transceiver devices, one or more transceiver units, one or more transceiver modules, any means for transceiving, i.e. for transmitting and/or receiving, etc. The transceiver module 12 may correspond to any means for receiving and transmitting. The transceiver module 12 may comprise typical transceiver components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The transmit antennas may correspond to any transmit and/or receive antennas, such as horn antennas, dipole antennas, patch antennas, etc. The plurality of antennas 15 may be arranged in a defined geometrical setting, such as a uniform linear array, a circular array, a triangular array, a uniform field, a field array, etc.

In the embodiment depicted in Fig. 1 the transceiver module 12 is further operable to subdivide the plurality of transmit antennas 15 in a plurality of subgroups using the interfaces. The transceiver module 12 is further operable to form a set of first beam patterns 16 (shown in solid lines) using one or more transmit antennas of a subgroup. In Fig. 1 the set of first beam patterns 16 is indicated by two solid line beams 16, where the length of such a beam may qualitatively indicate the BF gain of a beam and the width of a beam may qualitatively indicate an angular aperture of the beam. As shown in Fig. 1, the transceiver module 12 is coupled to a control module 14. The control module may be implemented as or correspond to one or more control units, one or more control modules, one or more control devices, any means for controlling, etc. In some embodiments the control module may be implemented as a programmable hardware component such as a processor, a Digital Signal Processor (DSP), a general purpose processor, or any other programmable hardware. In some embodiments the control module 14 may therefore at least partly correspond to software, which is adapted to be executed on an accordingly adapted programmable hardware component.

The control module 14 is operable to determine information related to a quality of a radio link between the first transceiver 100 and the second transceiver 200. The control module 14 is further operable to determine a second beam pattern 18 (dashed line) for communicating with the second transceiver 200 using two or more beam patterns from the set of first beam patterns 16. A number of first beam patterns used to determine the second beam pattern 18 is based on the information related to the quality of the radio link between the first transceiver 100 and the second transceiver 200. The control module 14 is operable to communicate with the second transceiver 200 using the second beam pattern 18 and the transceiver module 12.

The BF as referred to with respect to embodiments described herein makes use of controlled superposition of the signals transmitted or received at the respective transmit/receive antennas 15. That is to say that a defined geometrical configuration of the plurality of transmit/receive antennas 15 may be used together with phase shifts introduced to the respective transmit or receive signals, in order to achieve defined superposition of the signals with respect to their direction relative to the plurality 15 of transmit/receive antennas. In other words, in some embodiments constructive or destructive superposition of these signals may be used. As indicated in Fig. 1, beams of the first set of beam patterns 16 are wider and have a lower BF gain than the second beam pattern 18. The transceiver apparatus 10 uses BF in two steps, where a first step is carried out by the transceiver module 12 in terms of the first set of beam patterns 16 and the second step is carried out by the control module 14 in terms of the second beam pattern 18.

In some embodiments the control module 14 is operable to determine information related to a quality of a radio link between the first transceiver 100 and at least a third transceiver 300, which is also shown in Fig. 1. The control module 14 is further operable to determine at least a third beam pattern 19 (dotted line) for communicating with the at least one third transceiver 300 using one or more beam patterns of the first set of beam patterns 16. A number of first beam patterns used to determine the third beam pattern 19 is based on the second beam pattern 18 and on the information related to the quality of the radio link between the first transceiver 100 and the third transceiver 300. The control module 14 is further operable to simultaneously communicate with the third transceiver 300 using the third beam pattern 19 and with the second transceiver 200 using the second beam pattern 18. In some embodiments the simultaneous communication refers to simultaneously using the same radio resources for communication with the second and third transceivers 200 and 300. These radio resources may correspond to frequency and time resources, code resources, respectively. As shown in Fig. 1, the second beam pattern 18 and the third beam pattern 19 both have a higher BF gain than the beams of the first set of beam patterns 16.

In some embodiments the control module 14 is operable to use the same number of first beam patterns to determine the second and third beam patterns 18 and 19. In other words, in some embodiments the control module uses the set of first beam patterns 16 to generate the second beam pattern 18, the third beam pattern 19, respectively. The third beam pattern 19 may be adapted to the second beam pattern 18 such that main lobes of the second and third beam pattern 18 and 19 point in different directions. The second and third beam patterns 18 and 19 may be substantially orthogonal. That is to say that the second beam pattern 18 may have a BF gain or antenna gain of substantially 0 in the direction of the main lope of the third beam pattern 19, and vice versa. Such substantially orthogonal beam patterns 18 and 19 may allow serving different transceivers 200, 300 using the same radio resources. That is to say that the second transceiver 200 and the third transceiver 300 may be served simultaneously on the same radio resources as the second beam pattern 18 and the third beam pattern 19 reduce or even prevent mutual interference using BF. Alternatively, such substantially orthogonal beam patterns 18 and 19 may allow serving spatially differing paths of a single transceiver 200 as described subsequently, respectively.

In embodiments the BF gain may be adapted to the quality of the respective radio links between the first transceiver 100 and other involved transceivers, for example, the second transceiver 200 and/or the third transceiver 300. The information related to the quality of the respective radio links may correspond to a Signal-to-Noise Ratio (SNR), a Signal-to-Interference Ratio (SIR), a Signal-to-Interference-and-Noise Ratio (SINR), a path loss, an attenuation, a Received Signal Code Power (RSCP), a Received Signal Strength Indicator (RSSI), a Doppler shift or spread, etc. In other words, the BF gain is adjusted to the radio link such that an overall link budget allows for the respective communication. In some embodiments the control module 14 may be operable to determine a second beam pattern 18 with a first higher BF gain when the quality of the radio link between the first transceiver 100 and the second transceiver 200 indicates a first lower quality. The control module 14 may be operable to determine a second beam pattern 18 with a second lower BF gain when the quality of the radio link between the first transceiver 100 and the second transceiver 200 indicates a second higher quality. In embodiments, the BF gain may be adapted to the quality, with a higher BF gain for a lower quality of the radio link and vice versa, in order to balance or compensate radio link quality differences between different users, different paths of a user, respectively.

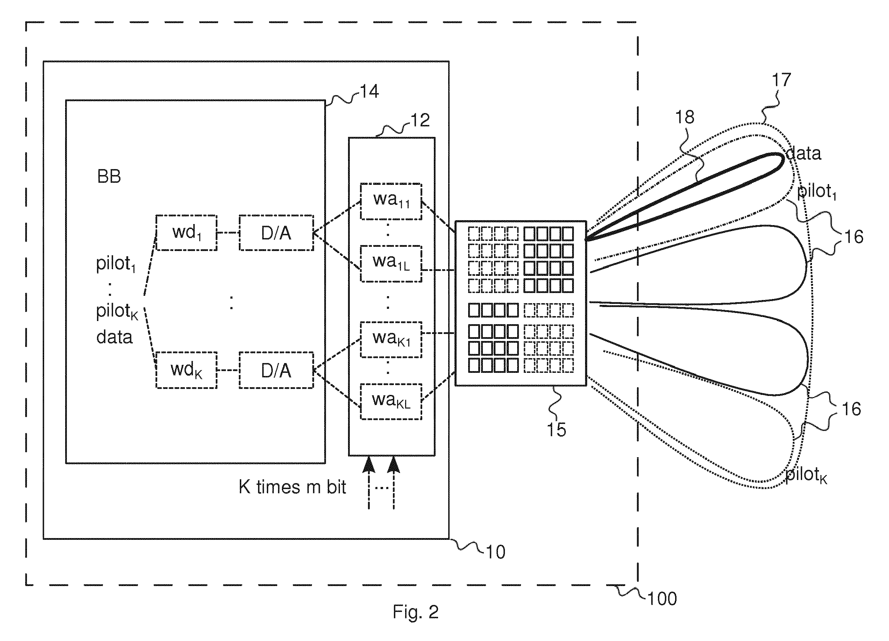

In some embodiments the first transceiver 100 may be operable to form the first set of beam patterns 16 using analog BF and the control module 14 may be operable to determine the second beam pattern 18 using digital BF. Hybrid digital/analog BF may be considered attractive, as it may have reduced complexity compared to fully digital implementations. The analog BF part may be carried out in the time domain, and only one analog beam may be used at the time by such a component. A hybrid digital/analog BF approach may relieve this limitation. Fig. 2 illustrates a block diagram of another embodiment of a transceiver apparatus 10. The embodiment depicted in Fig. 2 uses hybrid analog/digital BF with K digital paths. These K digital paths are shown within the control module 14 having K digital weighting filters wd₁..wd_{K} followed by respective Digital-to-Analog (D/A) converters. The transceiver module 12 comprises analog phase shifters, of which there are L phase shifters in each of the K paths. The analog phase shifters are indicated in Fig. 2 by the weights wa₁₁..wa_{1L} to wa_{K1}..wa_{KL}. The plurality of transmit antennas 15, which may as well serve as receive antennas, is arranged in a field array of antenna elements.

It is assumed that each of the plurality of antenna elements 15 is connected to one analog phase shifter of the transceiver module 12. The individual phase shifts of the analog phase shifters may be provided digitally, as is indicated by the "K times m bits" input to the transceiver module 12 in Fig. 2. It is to be noted, that in other embodiments instead of analog phase shifters a Butler matrix may be used with preset phase relations and BF patterns. In Fig. 2 each digital path is connected to a (disjoint) sub-array of L antenna elements. Independent analog BF may be applied within each sub-array, for transmission and reception. In the following it is assumed that a transceiver 100 is applied by a base station transceiver. In other embodiments a similar transceiver 100 may be used in a mobile transceiver. In the following embodiment it is assumed that K=4, L=16, each antenna element has a gain of 7dBi resulting in a 7dBi sector gain, and hence a 25dBi pencil beam can be realized by hybrid analog/digital BF involving all available antenna elements.

In other words, each individual antenna element may have an antenna pattern as indicated by pattern 17 in Fig. 2. Such an antenna pattern may cover a sector or a cell out of multiple sectors or cells served by the base station transceiver 100. Moreover, it is assumed that the first set of beam patterns 16 is generated by the transceiver module 12 using analog BF. For example, it can be assumed that the shown antenna elements 15 illuminate the same sector, for example, a 90° sector. Further sub-sectorization can be implemented by digital BF while the analog BF uses pre-defined sector weights, for example, K orthogonal sub-sectors at the time as indicated by Fig. 2. As further shown in Fig. 2 each sub-sector, in this embodiment corresponding to the first set of beam patterns 16, may utilize its own pilot signal pilot₁..pilot_{K}. The second beam pattern 18, which is also shown in Fig. 2, may then be used to transmit payload data from the base station transceiver 100 to a mobile transceiver.

Some mobile communication systems, for example WCDMA or LTE, may use BF which is implemented fully digitally. Spatial Division Multiple Access (SDMA) may be applied by involving all antenna elements for each user and thus using maximum BF gain for each user. Embodiments may ease the issues and limitation introducing hybrid A/D BF. Some of existing systems such as based on IEEE802.11 may not support SDMA. As shown in Fig. 2, when using hybrid A/D BF with the 25dBi pencil beam only one single user may be scheduled per time slot. Embodiments may enhance the flexibility of such a system, as scheduling of multiple users via SDMA may be enabled.

Embodiments may adapt BF gain to, for example, the SNR of the user or mobile transceiver, which may be achieved by adapting the number of antenna elements used to serve a user. A cell edge user or mobile transceiver may then be served with a 25dBi pencil beam 18 supported by 64 antenna elements 15. A user with better channel conditions may be served with a broader beam, for example a 19dBi beam supported by 16 antenna elements. Such 19dBi beam may be obtained purely by analog BF using a single sub-array from the set of sub-arrays or the first set of beam patterns 16. Up to K users may then concurrently be supported with 19dBi beams by using SDMA with shared transmit power, where SDMA may use different analog BF weights. The BF gain may further be adapted by transmitting a signal via 1, 2, ..., K sub-arrays, allowing BF gains of 19dBi, 22dBi, 23.77dBi or 25dBi.

In some embodiments usage of a broader beam may have the virtue that transmission becomes more robust with respect to movement of the user, or when some transmission paths get blocked by objects. This may motivate to reduce the BF gain also for moving users. In other words, the control module 14 may be operable to determine the second beam pattern 18 with a first higher BF gain when the quality of the radio link between the first transceiver 100 and the second transceiver 200 indicates a slower moving first or second transceiver 100, 200. The control module 14 may be operable to determine a second beam pattern 18 with a second lower BF gain when the quality of the radio link between the first transceiver 100 and the second transceiver 200 indicates a faster moving first or second transceiver 100, 200. In other words embodiments may use a wider beam for a faster moving user in order to assure a robust communication.

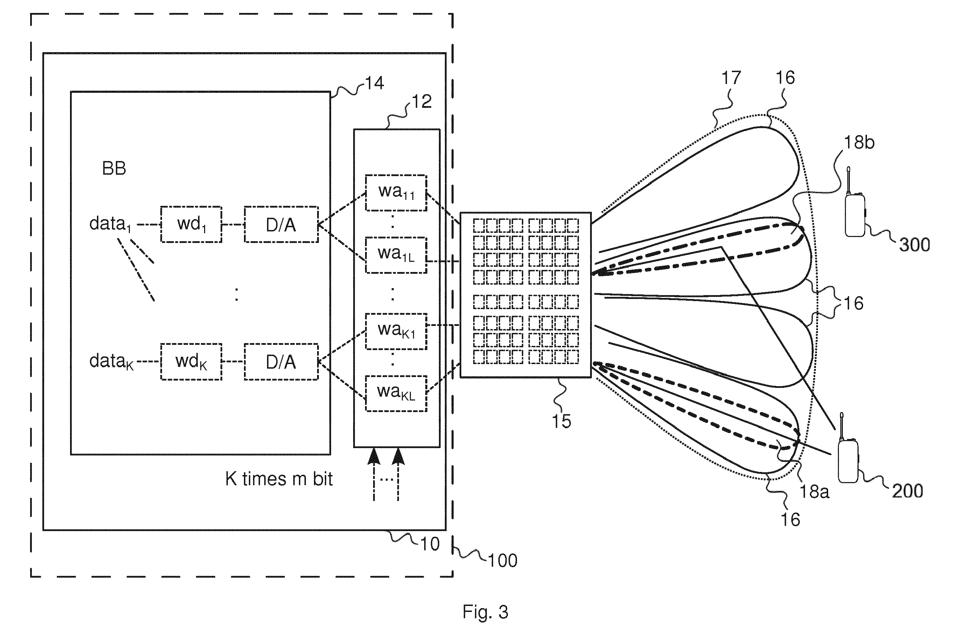

Fig. 3 illustrates another embodiment of a transceiver apparatus 10, which is again assumed to be located at a base station transceiver. Fig. 3 shows similar components as Fig. 2 but illustrates two different second beam pattern 18a and 18b. A second transceiver 200, which is implemented as a mobile transceiver, is served using the second beam pattern 18a, and a third transceiver 300, which is implemented as another mobile transceiver, is served using the second beam pattern 18b. The embodiment of Fig. 3 illustrates that the second transceiver 200 may be served via a single sub-array with a 19dBi BF gain and the third transceiver 300 may be concurrently served via three sub-arrays with 23.77dBi gain.

In further embodiments, rather than serving up to K users concurrently with reduced BF gain, a single user or transceiver may be served with up to K transmission paths, each of the paths using different BF. This may increase data rates of the user by using multiple streams over the strongest path, the second strongest and so on. Alternatively, this may provide a better reliability due to path diversity, which may be achieved by space-time encoding of the data streams and transmitting the data streams over the strongest path, the second strongest path, and so on. In other words, in some embodiments the control module 14 may be operable to determine information related to a quality of two or more spatially differing paths of the radio link between the first transceiver 100 and the second transceiver 200. The second beam pattern 18a may be based on the quality of a path from the two or more paths of the radio link, for example, the strongest path. The second beam pattern 18a may then be used to communicate with the second transceiver 200 using the path of the two or more paths of the radio link, for example, the strongest path. The control module 14 may be further operable to determine a further beam pattern 18b for communicating with the second transceiver 200 using another of the two or more paths. The number of first beam patterns used to determine the further beam pattern 18b may be based on the second beam pattern 18a and on the information related to the quality of the other path of the two or more paths in the radio link between the first transceiver 100 and the second transceiver 200. The control module 14 may be further operable to communicate with the second transceiver 200 using the second beam pattern 18a and the further beam pattern 18b along the two or more paths of the radio link.

Such an embodiment is also illustrated in Fig. 3, by means of the solid lines from the plurality of transmit antennas 15 to the second user 200. These two solid lines may represent two paths between the base station transceiver 100 and the second transceiver 200. The two beam pattern 18a and 18b may then be used to serve these two paths. It may be further assumed that the path pointing along beam pattern 18a has a lower path loss than the reflected path along beam 18b. The differences in the path losses may be compensated by using different BF gains, e.g. by using a single sub-array to form the second beam pattern 18a and using three sub-arrays for forming the beam pattern 18b, that is to say achieving 19dBi BF gain for beam pattern 18a and 23.77dBi for beam pattern 18b.

In this embodiment the control module 14 may be operable to simultaneously communicate different data or data streams using the second beam pattern 18a and the further beam pattern 18b to the second transceiver 200. In a further embodiment the control module 14 may be operable to simultaneously communicate space-time encoded data using the second beam pattern 18a and the further beam pattern 18b to the second transceiver 200, achieving diversity gain and more robust transmission instead of higher data rates. As also shown in Fig. 3, the further beam pattern 18b is adapted to the second beam pattern 18a such that main lobes of the further and the second beam pattern 18a and 18b point in different directions, or the second beam pattern 18a and the further beam pattern 18b are substantially orthogonal, in line with what was described above.

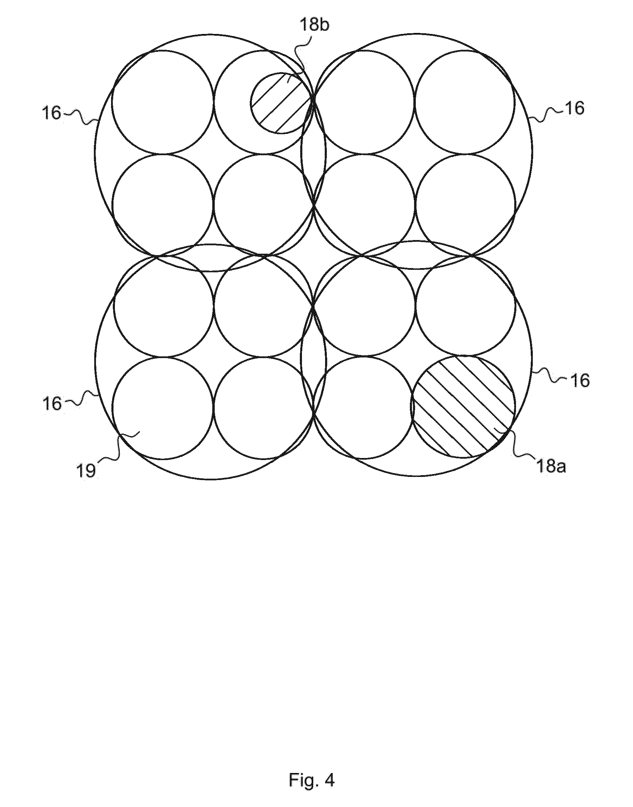

Fig. 3 further illustrates that the transmit antenna of the plurality of transmit antennas 15 may use an individual beam pattern 17 covering a sector of the first transceiver 100. The set of first beam patterns 16 may correspond to a set of sub-sectors of the sector. In some embodiments the control module 14 may be operable to determine the second beam pattern 18 by a selection of one beam pattern from the set of first beam patterns 16. In other words, analog sub-sectors may be introduced, which may be either used in parallel or one at the time. This may increase the number of high gain beams that may concurrently be used as will be further described below. Fig. 4 illustrates different beam patterns in an embodiment. Fig. 4 shows a front view onto the antenna field array 15 with illustration of four sub-sectors as the first set of beam patterns 16. Within each sub-sector four analog beams are available, one of which is referenced with reference sign 19. Within each sub-sector these four analog beams may be used for further BF, for example, digital BF. In line with the embodiment described above, two users or transceivers 200 and 300 may be concurrently served, one using the second beam pattern 18a and the other using the second beam pattern 18b. As indicated in Fig. 4, the second beam pattern 18b is narrower and has a higher beam forming gain, 23.77dBi, while the other second beam pattern 18a is wider and has a lower beam forming gain, 19dBi.

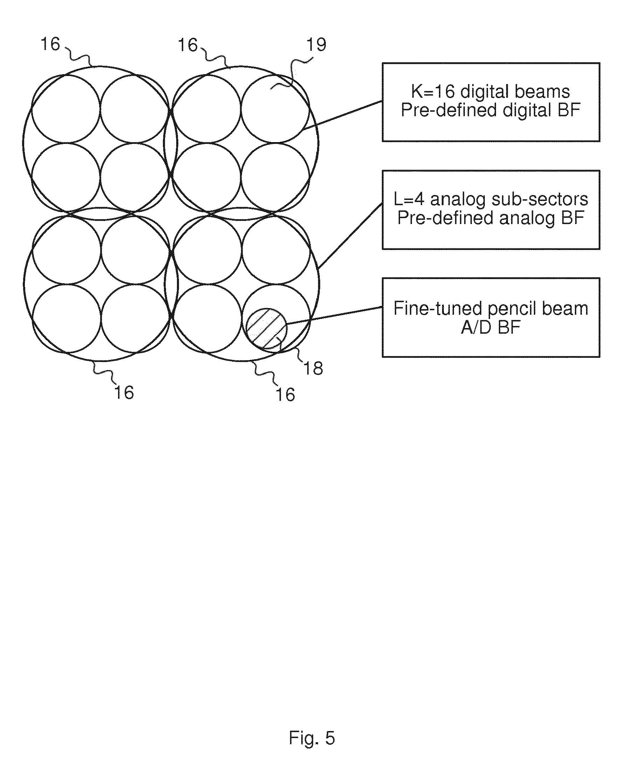

Fig. 5 further shows the embodiment by illustrating the front view onto the antenna field array 15 assuming a hybrid A/D transceiver 100 with 64 antenna elements, K=16 digital paths and L=4 elements per sub-array. The L=4 analog sub-sectors are assumed to be pre-defined via analog BF and are illustrated in Fig. 5 as the first set of beam patterns 16, comprising the four sub-sectors 16. For example, the first set of beam patterns 16 may correspond to 16 equal groups of 4 different analog beam patterns to select from, e.g. corresponding to 16 Butler matrices (phase shifters, respectively) each offering four inputs for the four beams 16 as illustrated in Fig. 5, and each of the 16 Butler matrices connects to 4 antennas. In other words, on each of the 16 Butler matrices one input may be used for one of the 16 digital paths. As shown in Fig. 5 using one input of one of the 16 Butler matrices generates one of the four beam patterns 16.

The hybrid A/D BF transceiver 100 employs 64 antennas with K=16 digital paths, each connected to a sub-array with L=4 elements; further assuming a 7dBi element gain, 7dBi sector gain, 13dBi pure analog BF gain, 19dBi pure digital BF gain, and 25dBi pencil beam gain. In this embodiment K=16 users/paths can be served concurrently with downlink transmit power P reduced by 12dB on 19dBi digital beams, or a single user can be served with downlink power P on a 25dBi pencil beam, where P denotes the maximum downlink transmit power. Fig. 5 illustrates a fine tuned pencil beam as second beam pattern 18, which can be formed by coherently combining signals from the 16 Butler matrices. In embodiments applying pre-defined analog BF, may result in four orthogonal analog sub-sectors 16.

Such analog sub-sectors 16 may be formed in parallel, which may depend on the respective Butler matrices grouping and the input selection within such a group. For example, an analog sub-sector 16 can be used by a group of four sub-arrays (Butler matrices), each using 4 antennas, i.e. 16 antennas altogether and four sub-sectors may be served at the time. The analog weights may be adjusted per such a group (same inputs selected on Butler matrices within a group, and different inputs selected on Butler matrices of different groups, respectively). By applying digital BF over such a group of four sub-arrays, four users/paths may be served concurrently with P-12dBi downlink transmit power on a 19dBi A/D beam 19 in each analog sub-sector 16 (6dB less antenna gain since only 16 antennas are used instead of 64, 6dB less transmit power for each of the 4 sub-sectors 16, and another 6dB less transmit power for each of four users per analog sub-sector 16). It is to be noted that such a grouping would also allow serving 4 users concurrently in four different analog sub-sectors 16 as shown in Fig. 5 with P-6dB transmit power for each of the four users. 4 users may as well be served concurrently within one, two or three of the analog sub-sectors 16 shown in Fig. 5 depending on the digital BF used. As indicated by the beam patterns 19 in Fig. 5 four such beam patterns may be formed in one analog sub-sector 16. Using digital BF in 16 paths generally may allow forming 4 digital sub-sectors 19 per analog sub-sector 16, yielding the 16 "hybrid" beam patterns 19 shown in Fig. 5.

Alternatively, per such group or sub-sector 16 a single user may be served with P-6dBi downlink power on a 19dBi A/D beam. In another embodiment the analog sub-sectors 16 may be used in a time division multiplexing manner. An analog sub-sector may then alternatively be served by a group of 16 sub-arrays, all 64 antennas, one sub-sector 16 at the time. With such analog sub-sectors up to K=16 concurrent orthogonal beams may be formed by digital pre-coding, one of which is depicted in Fig. 5 by pencil beam 18. This may allow to serve up to 16 users/paths concurrently within an analog sub-sector 16 with P-12dBi downlink transmit power on 25dBi pencil beams 18. Serving the sub-sectors 16 in time division multiplex may increase the number of digital paths that can be concurrently served with full 25dBi BF gain. In further embodiments other combinations are conceivable, e.g. using any other grouping of the sub-arrays 16, e.g. two groups with 32 antennas each, two groups with 48 and 16 antennas, three groups with 16, 16, and 32 antennas, 4, 4, 56 antennas, any other combination on a quantization level of the number of antenna elements within one analog beamformer, etc. The grouping may further be changed in a time multiplexing manner.

In other words, in some embodiments the control module 14 may be operable to determine the second beam pattern 18 by using different combinations of one or more beam patterns of the set of first beam patterns 16 in a time multiplexed manner. A time division multiplexing scheme may be applied to sequentially use the beam patterns of the first set of beam patterns 16 for different digital/hybrid BF, e.g. serving up to 16 users simultaneously per analog sub-sector 16 in Fig. 5, where the four analog sub-sectors 16 are served subsequently. Other embodiments may use any other sequences or combinations. In other words, the time multiplexing scheme may be a sequence through different sets of second beam patterns 18, formed based on different combinations or different BF applied to one or more beam pattern from the first set of beam patterns 16. An analog beam steering may be implemented independently for each sub-array or sub-sector 16, or a group of sub-arrays, for example four sub-arrays, may use the same weights. Embodiments may hence provide a BF concept with improved flexibility, improved data rates and robustness of mm-Wave access systems.

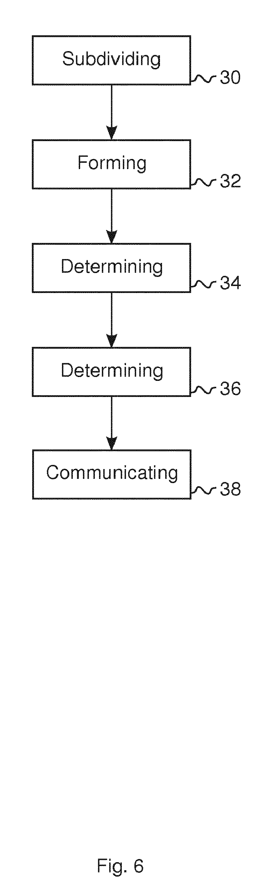

Fig. 6 illustrates a block diagram of an embodiment of a method for a first transceiver 100 of a mobile communication system. The method comprises subdividing 30 a plurality of transmit antennas 15 in a plurality of subgroups. The method further comprises forming 32 a set of first beam patterns 16 using one or more transmit antennas of a subgroup and determining 34 information related to a quality of a radio link between the first transceiver 100 and the second transceiver 200. The method further comprises determining 36 a second beam pattern 18 for communicating with the mobile transceiver 200 using one or more of the first beam patterns 16. A number of first beam patterns used to determine the second beam pattern 18 is based on the information related to the quality of the radio link between the first transceiver 100 and the second transceiver 200. The method further comprises communicating 38 with the second transceiver 200 using the second beam pattern 18.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transceiving", "means for controlling/processing", etc., may be provided through the use of dedicated hardware, such as "a transceiver", "a controller/processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) operable in a first transceiver (100) of a mobile communication system, the apparatus (10) comprising
a transceiver module (12) comprising interfaces to a plurality of transmit antennas (15) and operable to:
subdivide the plurality of transmit antennas (15) in a plurality of subgroups using the interfaces,
form a set of first beam patterns (16) using one or more transmit antennas of a subgroup; and
a control module (14) operable to:
determine information related to a quality of a radio link between the first transceiver (100) and a second transceiver (200);
determine a second beam pattern (18) for communicating with the second transceiver (200) using two or more beam patterns from the set of first beam patterns (16), a number of first beam patterns used to determine the second beam pattern (18) being based on the information related to the quality of the radio link between the first transceiver (100) and the second transceiver (200);
communicate with the second transceiver (200) using the second beam pattern (18) and the transceiver module (12).

2. The apparatus (10) of claim 1, wherein the control module (14) is operable to:
determine information related to a quality of a radio link between the first transceiver (100) and at least a third transceiver (300),
determine at least a third beam pattern (19) for communicating with the at least one third transceiver (300) using one or more beam patterns from the first set of beam patterns (16), a number of first beam patterns used to determine the third beam pattern (19) being based on the second beam pattern (18) and on the information related to the quality of the radio link between the first transceiver (100) and the third transceiver (300),
simultaneously communicate with the third transceiver (300) using the third beam pattern (19) and with the second transceiver (200) using the second beam pattern (18).

3. The apparatus (10) of claim 2, wherein the control module (14) is operable to use the same number of first beam patterns to determine the second and the third beam pattern (18; 19).

4. The apparatus (10) of claim 2, wherein the third beam pattern (19) is adapted to the second beam pattern (18) such that main lobes of the second and the third beam patterns (18;19) point in different directions, or wherein the second and third beam patterns (18;19) are substantially orthogonal.

5. The apparatus of claim 1, wherein the control module (14) is operable to determine a second beam pattern (18) with a first higher beamforming gain when the quality of the radio link between the first transceiver (100) and the second transceiver (200) indicates a first lower quality, and wherein the control module (14) is operable to determine a second beam pattern (18) with a second lower beamforming gain when the quality of the radio link between the first transceiver (100) and the second transceiver (200) indicates a second higher quality.

6. The apparatus (10) of claim 1, wherein the first transceiver (100) is operable to form the first set of beam patterns (16) using analog beamforming and wherein the control module (14) is operable to determine the second beam pattern (18) using digital beamforming.

7. The apparatus (10) of claim 1, wherein the control module (14) is operable to:
determine information related to a quality of two or more spatially differing paths of the radio link between the first transceiver (100) and the second transceiver (200), wherein the second beam pattern (18a) is based on the quality of a path from the two or more paths of the radio link and wherein the second beam pattern (18a) is used to communicate with the second transceiver (200) using the path of the two or more paths of the radio link,
determine a further beam pattern (18b) for communicating with the second transceiver (200) using another of the two or more paths, a number of first beam patterns used to determine the further beam pattern (18b) being based on the second beam pattern (18a) and on the information related to the quality of the other path of the two or more paths of the radio link between the first transceiver (100) and the second transceiver (200), and
communicate with the second transceiver (200) using the second beam pattern (18a) and the further beam pattern (18b) along the two or more paths of the radio link.

8. The apparatus (10) of claim 7, wherein the control module (14) is operable to simultaneously communicate different data using the second beam pattern (18a) and the further beam pattern (18b) to the second transceiver (200).

9. The apparatus (10) of claim 7, wherein the control module (14) is operable to simultaneously communicate space-time encoded data using the second beam pattern (18a) and the further beam pattern (18b) to the second transceiver (200).

10. The apparatus (10) of claim 7, wherein the further beam pattern (18b) is adapted to the second beam pattern (18a) such that main lobes of the further and the second beam pattern (18b; 18a) point in different directions, or wherein the second beam pattern (18a) and the further beam pattern (18b) are substantially orthogonal.

11. The apparatus (10) of claim 1, wherein the control module (14) is operable to determine the second beam pattern (18) with a first higher beamforming gain when the quality of the radio link between the first transceiver (100) and the second transceiver (200) indicates a slower moving first or second transceiver (100;200), and wherein the control module (14) is operable to determine a second beam pattern (18) with a second lower beamforming gain when the quality of the radio link between the first transceiver (100) and the second transceiver (200) indicates a faster moving first or second transceiver (100;200).

12. The apparatus (10) of claim 1, wherein a transmit antenna uses an individual beam pattern covering a sector of the first transceiver (100), wherein the set of first beam patterns (16) corresponds to a set of subsectors of the sector.

13. The apparatus (10) of claim 1, wherein the control module (14) is operable to determine the second beam pattern (18) by selection of one beam pattern from the set of first beam patterns (16) and/or wherein the control module (14) is operable to determine the second beam pattern (18) by using different combinations of one or more beam patterns of the set of first beam patterns (16) in a time multiplexed manner.

14. A method for a first transceiver (100) of a mobile communication system, the method comprising
subdividing (30) a plurality of transmit antennas (15) in a plurality of subgroups;
forming (32) a set of first beam patterns (16) using one or more transmit antennas of a subgroup;
determining (34) information related to a quality of a radio link between the first transceiver (100) and a second transceiver (200);
determining (36) a second beam pattern (18) for communicating with the mobile transceiver (200) using one or more of the first beam patterns (16), a number of first beam patterns used to determine the second beam pattern (18) being based on the information related to the quality of the radio link between the first transceiver (100) and the second transceiver (200);
communicating (38) with the second transceiver (200) using the second beam pattern (18).

15. A computer program having a program code for performing the method of claim 14, when the computer program is executed on a computer, a processor, or a programmable hardware component.

## Amended claims

### Amended claims in accordance with Rule 137(2) EPC.

1. An apparatus (10) operable in a first transceiver (100) of a mobile communication system, the apparatus (10) comprising
a transceiver module (12) comprising interfaces to a plurality of transmit antennas (15) and operable to:
subdivide the plurality of transmit antennas (15) in a plurality of subgroups using the interfaces,
form a set of first beam patterns (16) using one or more transmit antennas of a subgroup; and
a control module (14) operable to:
determine information related to a quality of a radio link between the first transceiver (100) and a second transceiver (200);
determine a second beam pattern (18) for communicating with the second transceiver (200) using two or more beam patterns from the set of first beam patterns (16), a number of first beam patterns used to determine the second beam pattern (18) being based on the information related to the quality of the radio link between the first transceiver (100) and the second transceiver (200);
communicate with the second transceiver (200) using the second beam pattern (18) and the transceiver module (12), wherein the control module (14) is operable to:
determine information related to a quality of a radio link between the first transceiver (100) and at least a third transceiver (300),
determine at least a third beam pattern (19) for communicating with the at least one third transceiver (300) using one or more beam patterns from the first set of beam patterns (16), a number of first beam patterns used to determine the third beam pattern (19) being based on the second beam pattern (18) and on the information related to the quality of the radio link between the first transceiver (100) and the third transceiver (300),
simultaneously communicate with the third transceiver (300) using the third beam pattern (19) and with the second transceiver (200) using the second beam pattern (18).

2. The apparatus (10) of claim 1, wherein the control module (14) is operable to use the same number of first beam patterns to determine the second and the third beam pattern (18; 19).

3. The apparatus (10) of claim 1, wherein the third beam pattern (19) is adapted to the second beam pattern (18) such that main lobes of the second and the third beam patterns (18;19) point in different directions, or wherein the second and third beam patterns (18;19) are substantially orthogonal.

4. The apparatus of claim 1, wherein the control module (14) is operable to determine a second beam pattern (18) with a first higher beamforming gain when the quality of the radio link between the first transceiver (100) and the second transceiver (200) indicates a first lower quality, and wherein the control module (14) is operable to determine a second beam pattern (18) with a second lower beamforming gain when the quality of the radio link between the first transceiver (100) and the second transceiver (200) indicates a second higher quality.

5. The apparatus (10) of claim 1, wherein the first transceiver (100) is operable to form the first set of beam patterns (16) using analog beamforming and wherein the control module (14) is operable to determine the second beam pattern (18) using digital beamforming.

6. The apparatus (10) of claim 1, wherein the control module (14) is operable to:
determine information related to a quality of two or more spatially differing paths of the radio link between the first transceiver (100) and the second transceiver (200), wherein the second beam pattern (18a) is based on the quality of a path from the two or more paths of the radio link and wherein the second beam pattern (18a) is used to communicate with the second transceiver (200) using the path of the two or more paths of the radio link,
determine a further beam pattern (18b) for communicating with the second transceiver (200) using another of the two or more paths, a number of first beam patterns used to determine the further beam pattern (18b) being based on the second beam pattern (18a) and on the information related to the quality of the other path of the two or more paths of the radio link between the first transceiver (100) and the second transceiver (200), and
communicate with the second transceiver (200) using the second beam pattern (18a) and the further beam pattern (18b) along the two or more paths of the radio link.

7. The apparatus (10) of claim 6, wherein the control module (14) is operable to simultaneously communicate different data using the second beam pattern (18a) and the further beam pattern (18b) to the second transceiver (200).

8. The apparatus (10) of claim 6, wherein the control module (14) is operable to simultaneously communicate space-time encoded data using the second beam pattern (18a) and the further beam pattern (18b) to the second transceiver (200).

9. The apparatus (10) of claim 6, wherein the further beam pattern (18b) is adapted to the second beam pattern (18a) such that main lobes of the further and the second beam pattern (18b; 18a) point in different directions, or wherein the second beam pattern (18a) and the further beam pattern (18b) are substantially orthogonal.

10. The apparatus (10) of claim 1, wherein the control module (14) is operable to determine the second beam pattern (18) with a first higher beamforming gain when the quality of the radio link between the first transceiver (100) and the second transceiver (200) indicates a slower moving first or second transceiver (100;200), and wherein the control module (14) is operable to determine a second beam pattern (18) with a second lower beamforming gain when the quality of the radio link between the first transceiver (100) and the second transceiver (200) indicates a faster moving first or second transceiver (100;200).

11. The apparatus (10) of claim 1, wherein a transmit antenna uses an individual beam pattern covering a sector of the first transceiver (100), wherein the set of first beam patterns (16) corresponds to a set of subsectors of the sector.

12. The apparatus (10) of claim 1, wherein the control module (14) is operable to determine the second beam pattern (18) by selection of one beam pattern from the set of first beam patterns (16) and/or wherein the control module (14) is operable to determine the second beam pattern (18) by using different combinations of one or more beam patterns of the set of first beam patterns (16) in a time multiplexed manner.

13. A method for a first transceiver (100) of a mobile communication system, the method comprising
subdividing (30) a plurality of transmit antennas (15) in a plurality of subgroups;
forming (32) a set of first beam patterns (16) using one or more transmit antennas of a subgroup;
determining (34) information related to a quality of a radio link between the first transceiver (100) and a second transceiver (200);
determining (36) a second beam pattern (18) for communicating with the mobile transceiver (200) using one or more of the first beam patterns (16), a number of first beam patterns used to determine the second beam pattern (18) being based on the information related to the quality of the radio link between the first transceiver (100) and the second transceiver (200);
communicating (38) with the second transceiver (200) using the second beam pattern (18);
determining information related to a quality of a radio link between the first transceiver (100) and at least a third transceiver (300),
determining at least a third beam pattern (19) for communicating with the at least one third transceiver (300) using one or more beam patterns from the first set of beam patterns (16), a number of first beam patterns used to determine the third beam pattern (19) being based on the second beam pattern (18) and on the information related to the quality of the radio link between the first transceiver (100) and the third transceiver (300),
simultaneously communicating with the third transceiver (300) using the third beam pattern (19) and with the second transceiver (200) using the second beam pattern (18).

14. A computer program having a program code for performing the method of claim 13, when the computer program is executed on a computer, a processor, or a programmable hardware component.
